# EUROPÄISCHE PATENTSCHRIFT

(11) **EP 3 520 982 B1**
(45) Veröffentlichungstag und Bekanntmachung des Hinweises auf die Patenterteilung: **31.03.2021**
(21) Anmeldenummer: 19000068.7
(22) Anmeldetag: 06.02.2019
(51) Int. Cl.: B29C 45/14, F16L 47/20, F16L 53/38

(54) **MEDIENLEITUNG MIT VERBINDUNGSKONTUR SOWIE VERFAHREN ZUM HERSTELLEN EINER MIT ZUMINDEST EINER VERBINDUNGSKONTUR VORSEHENEN MEDIENLEITUNG**
MEDIA CONDUIT WITH CONNECTING CONTOUR AND METHOD FOR PRODUCING A MEDIA CONDUIT PROVIDED WITH AT LEAST ONE CONNECTING CONTOUR
CONDUITE DE FLUIDE AVEC CONTOUR DE LIAISON AINSI QUE PROCÉDÉ DE FABRICATION D'UNE CONDUITE DE FLUIDE POURVUE D'AU MOINS UN CONTOUR DE CONNEXION

(30) Priorität: 06.02.2018 DE 102018000932
(43) Veröffentlichungstag der Anmeldung: 07.08.2019
(73) Patentinhaber: Voss Automotive GmbH, 51688 Wipperfürth (DE)
(72) Erfinder: Rudel, Stev, 51766 Engelskirchen (DE); de Beer, Daniel, 51766 Engelskirchen (DE); Kolberg, Ralf, 50733 Köln (DE)
(74) Vertreter: Rebbereh, Cornelia

(56) Entgegenhaltungen:
- US-B1- 8 277 714

## Beschreibung

Die Erfindung betrifft eine Medienleitung mit Verbindungskontur, wobei die Medienleitung mehrlagig und an zumindest ihrem einen Leitungsende mit der Verbindungskontur versehen ist, wobei die mehrlagige Medienleitung mit der Verbindungskontur umspritzt ist, sowie ein Verfahren zum Herstellen einer mit zumindest einer Verbindungskontur versehenen mehrlagigen Medienleitung, wobei die Verbindungskontur endseitig an die Medienleitung angespritzt wird.

Medienleitungen mit Verbindungskontur sind im Stand der Technik in unterschiedlichsten Anwendungen, wie zum Beispiel im Automotivebereich, bekannt. Solche Medienleitungen können ein- oder mehrlagig ausgebildet und insbesondere elektrisch beheizbar sein, um ein durch diese hindurchströmendes Medium an einem Einfrieren zu hindern und/oder ein bereits eingefrorenes Medium hierüber wieder aufzutauen. Das Vorsehen zumindest einer Verbindungskontur an dem zumindest einen Leitungsende der Medienleitung dient dem fluidischen Verbinden der Medienleitung mit beispielsweise einer anderen Medienleitung oder einem Aggregat. Die Verbindungskonturen können z.B. nach Art von sogenannten Schnellkupplungssystemen ausgebildet sein, um Medienleitungen miteinander oder mit Aggregaten verbinden zu können. Um einen ungewollten Austritt von Medium insbesondere im Verbindungsbereich von Medienleitung und Verbindungskontur zu vermeiden, sollte eine mediendichte Verbindung zwischen der Verbindungskontur und dem Leitungsende der Medienleitung vorgesehen werden.

Als Verbindungsmöglichkeiten zwischen Medienleitung und Verbindungskontur sind beispielsweise das Aufschieben einer Medienleitung auf ein Dornprofil, das an der Verbindungskontur ausgebildet bzw vorgesehen ist, bekannt, ebenfalls das Aufschieben der Medienleitung auf ein Anschlussstück an der Verbindungskontur, das einen Hinterschnitt aufweist, wobei eine Sicherung der Verbindung durch ein Sicherungs- bzw. Haltelement vorgenommen werden kann. Bekannt sind ferner Schweißverbindungen, wie beispielsweise Ultraschallschweißen, Vibrationsschweißen und Laserschweißen, um Medienleitung und Verbindungskontur miteinander zu verbinden. Auch verschiedene Klebeverfahren sowie ein thermoplastisches Umspritzen von einschichtigen bzw. einlagigen Medienleitungen sind im Stand der Technik bekannt. Beispielsweise offenbart die DE 10 2012 020 055 A1 eine konfektionierte elektrisch beheizbare Medienleitung mit zumindest einem Rohrleitungsteil mit integrierter elektrisch leitfähiger Einrichtung und mit zumindest einer Verbindungseinrichtung, wie einer Stecker-, Schraub- oder Kupplungseinrichtung, zum fluidischen Verbinden. In zumindest einem Endbereich des Rohrleitungsteils wird die integrierte elektrisch leitfähige Einrichtung freigelegt, dauerhaft durch eine Kontaktierungseinrichtung elektrisch kontaktiert und die Kontaktierungseinrichtung zum Anschluss an eine elektrische Energiequelle auf die Außenseite des Rohrleitungsteils herausgeführt. Die Verbindungseinrichtung wird als Verbindungskontur durch Urformen erzeugt oder eine Verbindungseinrichtung an den Endbereich des Rohrleitungsteils angefügt. Durch das Überdecken auch des Kontaktierungsbereichs der freigelegten integrierten leitfähigen Einrichtung des Rohrleitungsteils mit der Verbindungseinrichtung ist zugleich eine Abdichtung des Konnektierungsbereichs möglich. Aus der durch das Urformen oder einen Stoffschluss entstandenen Verbindungskontur herausragende Anschlusselemente, die mit der integrierten leitfähigen Einrichtung verbunden sind, werden durch Aufstecken eines Anschlusssteckers oder Auffügen einer Anschlusseinrichtung an eine elektrische Energiequelle angeschlossen.

Ferner ist beispielsweise aus der WO 2014/056628 A1 eine elektrisch beheizbare Medienleitung mit einer Rohrleitung mit zumindest zwei in deren Wandung eingebetteten elektrischen Leitern, elektrischen Zuleitern und mit zumindest einer fluidischen Anschlusskontur bekannt. Die Anschlusskontur ist um die Rohrleitung zusammen mit den elektrischen Leitern und Konnektierungsstellen an den elektrischen Leitern, die dem Verbinden mit elektrischen Zuleitern dienen, angeordnet. Die elektrischen Zuleiter sind stoffschlüssig mit den Leitern verbunden. Die Anschlusskontur bildet eine fluidische und elektrische Anschlusskontur, wobei die Anschlusskontur die elektrischen Konnektierungsstellen, einen Abschnitt der elektrischen Zuleiter und die Stirnseite der Rohrleitungswandung stoffschlüssig gespritzt umschließt. Zum Erzeugen einer hohen mechanischen Festigkeit werden Grenzflächen der umspritzten Elemente der Rohrleitung und der äußerem Ummantelung der elektrischen Zuleiter beim Umspritzen aufgeschmolzen und verbinden sich beim Erstarren des Umspritzungsmaterials der Anschlusskontur fest. Bei einem mehrschichtigen Aufbau der Rohrleitungswandung sind zumindest die Stirnflächen der äußersten und der innersten Schicht sowie die Außenfläche der äußersten Schicht stoffschlüssig mit dem Material der Anschlusskontur verbunden.

Die US 8,277,714 B1 offenbart das Aufbringen einer Abdeckung auf der Außenseite eines Kunststoffrohres durch Umspritzen. Eine Rohrleitung ist mit der Abdeckung versehen, wobei sich die Abdeckung im Wesentlichen über die gesamte Länge der Rohrleitung erstreckt. Die Abdeckung besteht aus einem Kunststoffmaterial, Glasfaser, Nylongewebe, Textilmaterialien, wie Baumwolle oder Polyester oder aus Metall. Die Abdeckung kann auch ein Geflecht oder eine Polymerhülse sein, die einen Abschnitt des Kunststoffrohres abdeckt. Die Rohrleitung kann auch als Wellrohr ausgebildet sein. Um die Umspritzungen endseitig auf die Rohrleitung und deren Abdeckung aufzubringen, wird die Abdeckung entweder gestutzt oder entfernt, um die darunterliegenden Abschnitte der Rohrleitung freizulegen. Hierbei entsteht ein Verbindungsbereich auf der Rohrleitung, in dem eine stoffschlüssige Verbindung mit dem Umspritzungsmaterial erfolgt. Die Abdeckung wird aufgenommen zwischen der stoffschlüssigen Verbindung mit der Rohrleitung und der Umspritzung zum Erzielen einer mediendichten Verbindung. Die Abdeckung kann ein grobmaschiges Geflecht sein, das um ein Kunststoffrohr herum angeordnet ist. Beim Umspritzen wird ein Teil des Geflechts mit umspritzt, wobei Umspritzungsmaterial über und zwischen den einzelnen Maschen des Geflechts eindringt.

Das Vorsehen einer mediendichten Verbindung von Medienleitung und Verbindungskontur erweist sich jedoch bei unterschiedlichen Materialien der Medienleitung und der Verbindungskontur als problematisch. Ein besonderes Problem stellen hierbei mehrlagige Medienleitungen dar, die auf ihrer Außenseite leitfähig ausgebildet sind, und auch solche, die eine außenseitige Ummantelung, wie z.B. ein Wellrohr, aufweisen oder solche, die eine äußere Schutzschicht, z.B. aus geschäumten Material, aufweisen.

Bei elektrisch beheizbaren Medienleitungen erweist es sich als vorteilhaft, die Medienleitung möglichst nah am Ende der Verbindungskontur zu positionieren, um ein Erwärmen der Verbindungskontur über die elektrisch beheizbare Medienleitung bis zur Stirnseite der Verbindungskontur zu ermöglichen und somit ein Einfrieren von dort hindurchströmendem Medium sicher vermeiden zu können. Als problematisch erweist es sich jedoch, dass die Stirnseite der Medienleitung üblicherweise eine zu kleine Fläche für eine dauerhaft dichte Anbindung der Verbindungskontur beim Umspritzen der Medienleitung vorsieht und dass die Außenschicht einer mehrlagigen Medienleitung sich oftmals nicht oder nur bedingt mit dem Material einer dort aufgespritzten Verbindungskontur verbindet. Daher kann es zu Leckagen des durch die Medienleitung mit endseitig an dieser vorgesehener Verbindungskontur hindurchströmenden Mediums kommen. Insbesondere bei Medien wie AdBlue® bzw. wässriger Harnstofflösung erweist sich dies als besonders problematisch, da in der Umgebung der Medienleitung vorhandene Aggregate und anderweitige Einrichtungen durch derartige austretende Medien in Mitleidenschaft gezogen bzw. beschädigt werden können. Wenngleich hier ein zusätzliches Fügen beispielsweise durch Verkleben von Medienleitung und Verbindungskontur oder durch eine Schweißverbindung,eine bessere Abdichtung schaffen könnte, erweist sich dies aus Kostengründen als nachteilig, da ein zusätzlicher Fügeschritt erhöhte Herstellungskosten mit sich bringt.

Der vorliegenden Erfindung liegt daher die Aufgabe zugrunde, eine Medienleitung mit Verbindungskontur, wobei die Medienleitung mehrlagig und an ihrem zumindest einen Leitungsende mit der Verbindungskontur versehen ist, sowie ein Verfahren zum Herstellen einer mit zumindest einer Verbindungskontur versehenen mehrlagigen Medienleitung zu schaffen, bei der bzw. dem eine mediendichte, robuste und kostenoptimierte Anbindung der Verbindungskontur an die mehrlagige Medienleitung ermöglicht wird, wobei zum möglichen Beheizen der Verbindungskontur bei Vorsehen einer beheizbaren Medienleitung das Medienleitungsende möglichst nahe an der Stirnfläche bzw. dem Ende der Verbindungskontur angeordnet werden sollte.

Für eine Medienleitung nach dem Oberbegriff des Anspruchs 1 wird die Aufgabe dadurch gelöst, dass die Medienleitung an dem Leitungsende oder im Bereich des Leitungsendes zumindest eine Fügezone zum mediendichten Fügen von Medienleitung und Verbindungskontur und entfernt von der Fügezone der Medienleitung zumindest einen Anspritzbereich aufweist, wobei die mehrlagige Medienleitung in der Fügezone zumindest einen bis zu einer inneren Fügeschicht der Leitungswandung der Medienleitung freigelegten Freilegungsabschnitt aufweist, und über den Anspritzbereich die Verbindungskontur außenseitig an die Medienleitung angespritzt ist. Für ein Verfahren zum Herstellen einer mit zumindest einer Verbindungskontur versehenen mehrlagigen Medienleitung wird die Aufgabe dadurch gelöst, dass zum mediendichten Anbinden der Verbindungskontur an die mehrlagige Medienleitung letztere endseitig in einem Freilegungsabschnitt bis zu einer Fügeschicht freigelegt wird, die mit dem Material der Verbindungskontur chemisch und/oder stofflich kompatibel ist, um eine Fügezone zum mediendichten Fügen mit der Verbindungskontur zu erzeugen, und dass zum Erzeugen der Verbindungskontur Umspritzungsmaterial an zumindest einem entfernt von der Fügezone liegenden Anspritzpunkt an die Medienleitung angespritzt wird. Weiterbildungen der Erfindung sind in den abhängigen Ansprüchen definiert.

Dadurch werden eine mehrlagige Medienleitung mit endseitig an dieser angeordneter Verbindungskontur sowie ein Verfahren zum Herstellen einer solchen mit zumindest einer Verbindungskontur endseitig versehenen mehrlagigen Medienleitung geschaffen, bei denen ein mediendichtes Fügen von Medienleitung und Verbindungskontur durch Vorsehen einer endseitig an der Medienleitung angeordneten Fügezone ermöglicht wird. Unter einer solchen Fügezone wird ein Abschnitt der Medienleitung verstanden, in dem ein mediendichtes Fügen von Medienleitung und auf deren Außenseite aufgespritzter Verbindungskontur ermöglicht wird. Die mehrlagige Medienleitung wird hierfür zunächst bis zu einer (inneren) Fügeschicht der Medienleitung freigelegt, also beispielweise zumindest eine Außenschicht der Medienleitung abgeschält und/oder eine zum Beheizen der Medienleitung vorgesehene Umwicklung von dieser mit Heizlitze(n) oder Heizband ebenso wie eine außenseitige Ummantelung, z.B. in Form eines Wellrohres, entfernt. Die Fügeschicht ist eine solche Schicht der mehrlagigen Medienleitung, die ein Material aufweist, das chemisch und/oder stofflich kompatibel zu dem Material der Verbindungskontur ist, so dass ein mediendichtes Fügen, wie beispielsweise ein stoffschlüssiges Verbinden, mit der Verbindungskontur möglich ist. Die Fügeschicht kann daher eine der Schichten der mehrlagigen Medienleitung sein, insbesondere die Trägerschicht bzw. innerste Schicht der Medienleitung oder eine der darüber angeordneten Schichten. Bei Vorsehen einer Medienleitung, die eine Schicht mit außenseitiger Umwicklung mit zumindest einer Heizlitze oder einem Heizband sowie eine außenseitige Ummantelung, z.B. in Form eines Wellrohres, aufweist, ist die Fügeschicht die unter Heizlitze(n) oder Heizband angeordnete Schicht der Medienleitung. Als chemisch und/oder stofflich kompatibel mit dem Material der Verbindungskontur wird ein Schichtmaterial der Medienleitung dann angesehen, wenn eine chemische und/oder stoffliche Verbindung zwischen diesen Materialien, wie z.B. thermoplastischen Spritzgussmaterialen, möglich ist, um ein mediendichtes Fügen der beiden Materialien bzw. von Medienleitung und Verbindungskontur zu ermöglichen. Die mehrlagige Medienleitung kann miteinander verbundene, insbesondere übereinander extrudierte, Schichten aufweisen. Ferner ist es möglich, dass die mehrlagige Medienleitung nur oder auch miteinander unverbundene, also nicht verbundene, Lagen oder Schichten umfasst. Insbesondere kann zumindest eine außenseitige Schutzschicht, wie z.B. eine Schicht aus geschäumtem Material, oder zumindest eine außenseitige Ummantelung, z.B. in Form eines Wellrohres, vorgesehen sein.

Durch das Freilegen der mehrlagigen Medienleitung bis zu der (inneren) Fügeschicht hin, die vom Material her mit der Verbindungskontur kompatibel ist, kann auch die Anbindungsfläche, die zum Verbinden von Medienleitung und Verbindungskontur zur Verfügung gestellt wird, vergrößert werden im Vergleich zu dem Umspritzen eines nicht freigelegten Medienleitungsendes, wie dies beispielsweise in dem vorstehend genannten Stand der Technik der DE 10 2010 051 550 A1 bzw. der WO 2014/056628 A1 der Fall ist. Eine größere Anbindungsfläche ermöglicht somit auch eine bessere und sicherere Verbindung.

Nach dem Freilegen der (inneren) Fügeschicht der mehrlagigen Medienleitung wird die Verbindungskontur von einem von der Fügezone entfernten Anspritzpunkt aus auf die Medienleitung aufgespritzt. Aufgrund des Freilegens des Freilegungsabschnitts am Leitungsende der Medienleitung wird die Wandungsstärke der Medienleitung in diesem Bereich der Fügezone reduziert, bzw. eine nur noch dünnwandige (innere) Schicht bzw. Fügeschicht freigelegt, die insbesondere eine Schichtdicke von kleiner gleich 25 % des Außendurchmessers der Medienleitung aufweist. Beispielsweise kann die Wandungsstärke 1,0 mm oder weniger betragen, z.B. lediglich 0,05 bis 0,5 mm. Dementsprechend können Medienleitungen mit einem Außendurchmesser-zu-Wandstärke-Verhältnis von 4 x 1, 5 x 1, 6 x 1 oder 8 x 1 vorgesehen sein, bei denen die Fügeschicht lediglich 1 mm beträgt.

Aufgrund der reduzierten bzw. geringen Wandungsstärke, somit der Dünnwandigkeit, der Medienleitung besteht die Gefahr, dass während des Umspritzens dieses Bereichs der Fügezone der Medienleitung, also des Freilegungsabschnitts, eine ungewollte Deformation und dementsprechend ein ungewolltes Hinterspritzen des Freilegungsabschnitts der Medienleitung im Bereich der Fügezone auftritt. Ein solches ungewolltes Hinterspritzen bzw. Deformieren des Freilegungsabschnitts der Medienleitung im Bereich der Fügezone soll jedoch vermieden werden, da hierbei auch die Ausbildung einer Bindenaht in diesem Funktionsbereich der Medienleitung auftritt, der die Funktion eines mediendichten Fügens von Medienleitung und Verbindungskontur behindert oder sogar unmöglich macht. Ein solches ungewolltes Hinterspritzen bzw. Deformieren des Freilegungsabschnitts der Medienleitung kann durch das Anordnen des Anspritzbereichs, in dem die Verbindungskontur außenseitig an die Medienleitung angespritzt wird, entfernt von der Fügezone der Medienleitung vermieden werden. Der zumindest eine Anspritzpunkt bzw. die zumindest eine Anspritzstelle im Anspritzbereich der Verbindungskontur wird somit beabstandet zur Fügezone vorgesehen, so dass das Umspritzungsmatertial von dem Anspritzpunkt des Anspritzbereichs der Verbindungskontur in Richtung der Fügezone strömt und dementsprechend diese nicht delaminiert bzw. hinterströmt, sondern vielmehr gleichmäßig umströmt. Das Material zum Bilden der Verbindungskontur kann von dem zumindest einen Anspritzpunkt in Richtung zur Fügezone und zum Ende der Medienleitung homogen strömen. Hierbei strömt die einströmende Materialschmelze vorteilhaft zunächst hauptsächlich radial um die Medienleitung herum und sodann gleichmäßig, als zylinderförmige Materialschmelze axial in Richtung des Leitungsendes der Medienleitung. Es wird somit eine homogene Quellströmung erzeugt, die einen dichten Anschluss des Materials der Verbindungskontur an die freigelegte (innere) Fügeschicht der Medienleitung im Bereich der Fügezone von dieser erlaubt. Hierdurch kann somit das Ausbilden einer Bindenaht im Bereich der Fügezone sicher vermieden werden.

Das Anspritzen der Verbindungskontur kann ferner entgegen der Fließrichtung des Materials bzw. Umspritzungsmaterials zum Bilden der Verbindungskontur erfolgen. Dementsprechend wird der Anspritzpunkt nicht nur entfernt von der Fügezone der Medienleitung angeordnet, sondern die Richtung des Anspritzens kann auch abgewandt von der Fügezone der Medienleitung vorgesehen werden, so dass das Anspritzen dementsprechend entgegen der späteren Fließrichtung des Materials zum Ausbilden der Verbindungskontur erfolgt. Das Material muss somit nach dem Eintritt in die Spritzgussform bzw. das Spritzgusswerkzeug seine anfängliche Strömungsrichtung ändern und sodann in Richtung der Fügezone der Medienleitung strömen. Hierdurch kann eine homogene Quellströmung noch weiter unterstützt werden und dementsprechend ein ungewolltes Deformieren des dünnwandigen endseitigen Freilegungsabschnitts der Medienleitung vermieden werden. Die homogene Strömung entsteht dadurch, dass die einströmende Schmelze des Materials hauptsächlich zunächst radial um die Wandung bzw. Rohrwandung der Medienleitung herum fließt bzw. strömt und dann gleichmäßig, als zylinderförmige Schmelze, axial in Richtung des Leitungsendes der Medienleitung bzw. des Rohrendes fließt bzw. strömt.

Der zumindest eine Anspritzpunkt bzw. die zumindest eine Anspritz- oder Angusstelle im Anspritzbereich der Verbindungskontur ist kann an einer oder im Bereich einer auskragenden Ausformung der Verbindungskontur, entfernt von der Fügezone, angeordnet. Das zumindest eine Spritzgussmaterial kann dementsprechend gegen eine Kavitätswandung in einem Spritzgusswerkzeug zum Formgeben der entsprechenden auskragenden Ausformung der Verbindungskontur beim Umspritzen der Medienleitung gespritzt werden. Durch das Vorsehen des zumindest einen Anspritzpunkts im Bereich einer auskragenden Ausformung der Verbindungskontur ist nicht nur axial in Bezug auf die Fügezone, sondern zudem radial eine maximale Entfernung zur Medienleitung gegeben, so dass ein Abtrag von Material der Medienleitung beim Umspritzen mit der Formmasse der Verbindungskontur vermieden werden kann. Hierdurch können somit Auswaschungen bzw. Abtragungen des Leitungsmaterials der Medienleitung verhindert werden.

Vorteilhaft ist es ferner möglich, nur einen einzigen Anspritzpunkt vorzusehen. Hierdurch können Kosten und Aufwand in Bezug auf das Spritzgusswerkzeug und den Spritzgussvorgang als solchen eingespart werden. Durch das von der Fügezone der Medienleitung entfernte Positionieren des Anspritzpunktes kann sich auch bei Vorsehen lediglich eines solchen Anspritzpunktes eine gleichmäßig umlaufende Fließfront der Formmasse bzw. des Umspritzungsmaterials, das die Verbindungskontur bildet, im Bereich des freigelegten Leitungsendes der Medienleitung, also des Freilegungsabschnitts in der Fügezone der Medienleitung, einstellen. Hierdurch ist eine kostengünstige Serienfertigung von mit einer solchen Verbindungskontur versehenen Medienleitungen möglich.

Die mit der Verbindungskontur umspritzte Länge der Medienleitung kann kleiner als die Gesamtlänge der Verbindungskontur sein. Die Verbindungskontur kann sich somit über eine größere Gesamtlänge erstrecken als der umspritzten Länge der Medienleitung entspräche, so dass die Verbindungskontur mit ihrem freien Ende endseitig über das Leitungsende der Medienleitung hinausragt. Die Medienleitung wird somit an ihrem Leitungsende vollständig stirnseitig und mantelseitig bzw. außenseitig von der Verbindungskontur umgeben. Das innere Lumen der Medienleitung wird in einem das Leitungsende der Medienleitung überragenden Endabschnitt der Verbindungskontur fortgeführt, d.h., auch dieser Endabschnitt der Verbindungskontur weist eine innere Durchgangsöffnung auf, deren Öffnungsweite zumindest im Wesentlichen der der Medienleitung entspricht, um ein kontinuierliches Weiterströmen eines durch die Medienleitung strömenden Mediums zu ermöglichen.

Die Fügezone kann sich über eine Länge von L1 ≤ 20 % der umspritzten Länge L der Medienleitung, an deren Leitungsende beginnend, erstrecken. Der Anspritzbereich erstreckt sich entfernt von der Fügezone in einem Abschnitt der umspritzten Länge der Medienleitung, der in einem Abstand von dem mit der Fügezone versehenen Leitungsende der Medienleitung beginnt und sich bis zu dem Ende der Verbindungskontur erstreckt, das am weitesten von der Fügezone entfernt ist. Der Abstand zwischen dem stirnseitigen Ende der Medienleitung und dem Beginn des Anspritzbereichs kann beispielsweise L2 ≥ 70 % der umspritzten Länge L der Medienleitung betragen. Dementsprechend ergeben dieser Abstand L2 zzgl. der Länge des Anspritzbereichs die umspritzte Länge L der Medienleitung. Die umspritzte Länge der Medienleitung kann grundsätzlich auch nahezu gleich oder gleich der Gesamtlänge der Verbindungskontur sein, wobei dann jedoch die Stirnseite der Medienleitung an dem mit der Fügezone versehenen Leitungsende stirnseitig nicht mehr umspritzt wäre. Dies ist üblicherweise nicht erwünscht. Sollte dies in Ausnahmefällen jedoch erwünscht sein, kann die umspritzte Länge der Medienleitung auch gleich der Gesamtlänge der Verbindungskontur ausgebildet werden.

Durch das endseitige Umspritzen der Medienleitung mit der Verbindungskontur ist es möglich, die Medienleitung so in ein Spritzgusswerkzeug, in dem das Umspritzen mit der Verbindungskontur erfolgt, einzulegen bzw. so darin zu positionieren, dass das Leitungsende der Medienleitung nahe an dem im Spritzgusswerkzeug bzw. der Spritzgussform herzustellenden Ende der Verbindungskontur positioniert ist. Es kann somit eine definierte Positionierung der Medienleitung innerhalb der Verbindungskontur vorgesehen werden. Durch das direkte Umspritzen des Leitungsendes der mehrlagigen Medienleitung kann ferner ein zusätzlicher Fügeprozess beispielsweise durch Verschweißen oder Verkleben zwischen Medienleitung und Verbindungskontur vermieden werden.

Zum mediendichten Fügen von Medienleitung und Verbindungskontur in der Fügezone weisen Medienleitung und Verbindungskontur zumindest im freigelegten Freilegungsabschnitt in der Fügezone stofflich und/oder chemisch zueinander kompatible Materialien auf, insbesondere gleiche oder gleichartige Materialen, wie beispielsweise ein oder mehrere Polyamide. Das Material zumindest einer Außenschicht der Medienleitung kann ferner nicht oder eingeschränkt verbindbar mit dem Material der Verbindungskontur sein. Insbesondere kann die zumindest eine Außenschicht der Medienleitung aus einem leitfähig dotierten Polyamid bestehen oder dieses aufweisen. Ferner kann die zumindest eine Außenschicht eine außenseitige Schutzschicht, z.B. aus einem geschäumten Material, und/oder eine außenseitige Ummantelung, z.B. aus Polyamid, sein. Für das Ausbilden einer mediendichten Verbindung von Medienleitung und Verbindungskontur erweist sich daher das Fügen im Bereich der Fügezone bzw. des freigelegten Freilegungsabschnitts als sinnvoll, wobei z.B. die freigelegte (innere) Fügeschicht der Medienleitung mit dem Material der Verbindungskontur gleichartiges Material aufweist.

Ggf. auf der Außenseite der Medienleitung angeordnete elektrische Zuleiter für eine elektrische Beheizung der Medienleitung, beispielsweise über Heizelemente, die in deren Wandung eingebettet oder auf der Fügeschicht angeordnet sind, können beim Umspritzen der Medienleitung mit der Verbindungskontur mit umspritzt werden. Dementsprechend ragen derartige elektrische Zuleiter nach dem Umspritzen des Leitungsendes der Medienleitung mit der Verbindungskontur aus dieser heraus. Auch derartige elektrische Zuleiter werden somit von der homogenen Quellströmung des Materials, das die Verbindungskontur ausbildet, homogen umströmt und in diesem aufgenommen.

Da äußere mechanische Belastungen, die an der Medienleitung im Bereich von deren Verbindungskontur angreifen, üblicherweise in erster Linie über die Kontaktfläche der Verbindungskontur zur Außenseite der Medienleitung, also nicht im freigelegten Freilegungsabschnitt der Fügezone der Medienleitung angreifen, ist bei Auftreten von äußeren mechanischen Belastungen der funktional für die Abdichtung relevante Bereich der Fügezone der Medienleitung weitgehend entlastet.

Auf der Verbindungskontur kann endseitig, insbesondere überlappend mit der Fügezone der Medienleitung oder diesen Bereich zumindest teilweise überlagernd, zumindest ein Dichtelement angeordnet sein, wie beispielsweise ein O-Ring. Aufgrund der definierten Positionierung des Leitungsendes der Medienleitung, das mit der Fügezone versehen ist, in Bezug auf die Verbindungskontur und durch das Freilegen einer (inneren) Fügeschicht des Leitungsendes der Medienleitung wird in diesem Bereich ferner ein gleichbleibender Fließquerschnitt beim Füllen der Spritzgussform bzw. des Spritzgusswerkzeugs sichergestellt, so dass eine besonders gute Positionierung des Dichtelementes dort, z.B. in einer dort vorgesehenen Nut, möglich ist. Das zumindest eine Dichtelement ist nachfolgend vorteilhaft außenseitig auf der Verbindungskontur angeordnet.

Es kann somit eine dauerhaft mediendichte, mit zumindest einer Verbindungskontur versehene Medienleitung, die insbesondere als beheizbare Medienleitung ausgebildet sein kann, geschaffen werden, die sich zudem aufgrund des Vorsehens eines Umspritzens der Medienleitung mit der Verbindungskontur kostengünstig herstellen lässt. Die Verbindungskontur kann z.B. in Form eines Steckers oder einer Kupplung ausgebildet werden.

Zur näheren Erläuterung der Erfindung werden im Folgenden Ausführungsbeispiele von dieser näher anhand der Zeichnungen beschrieben. Diese zeigen in:
- Figur 1: eine Längsschnittansicht einer ersten Ausführungsform einer erfindungsgemäßen Medienleitung mit endseitig an dieser angeordneter, erfindungsgemäß dort aufgespritzter Verbindungskontur,
- Figur 2a: eine perspektivische Ansicht einer mehrlagigen Medienleitung,
- Figur 2b: eine perspektivische Ansicht der Medienleitung gemäß Figur 2a, jedoch mit erfindungsgemäß endseitig bis zu einer inneren Fügeschicht freigelegtem Freilegungsabschnitt einer erfindungsgemäßen Fügezone,
- Figur 3: eine perspektivische Längsschnittansicht einer zweiten Ausführungsform einer erfindungsgemäßen beheizbaren Medienleitung mit Fügezone und erfindungsgemäß aufgespritzter Verbindungskontur,
- Figur 4: eine Längsschnittansicht als Detailansicht durch eine mit endseitiger Fügezone versehene Medienleitung mit Verbindungskontur, wobei die Medienleitung im dünnwandigen Freilegungsabschnitt ihrer Fügezone von der Verbindungskontur teilweise hinterspritzt ist,
- Figur 5: eine Längsschnittansicht durch eine erfindungsgemäße endseitig mit freigelegtem dünnwandigen Freilegungsabschnitt versehene Medienleitung mit erfindungsgemäß aufgespritzter Verbindungskontur, wobei die Verbindungskontur entfernt von der Fügezone angespritzt wurde,
- Figur 6: eine Längsschnittansicht einer weiteren Ausführungsform einer erfindungsgemäßen beheizbaren Medienleitung mit Fügezone und erfindungsgemäß aufgespritzter Verbindungskontur, wobei ein Detail zusätzlich vergrößert herausgezogen gezeigt ist, und
- Figur 7: eine Längsschnittansicht durch noch eine weitere Ausführungsform einer erfindungsgemäßen beheizbaren Medienleitung mit einer erfindungsgemäß aufgespritzten Verbindungskontur, wobei ein Detail wiederum zusätzlich vergrößert herausgezogen gezeigt ist.

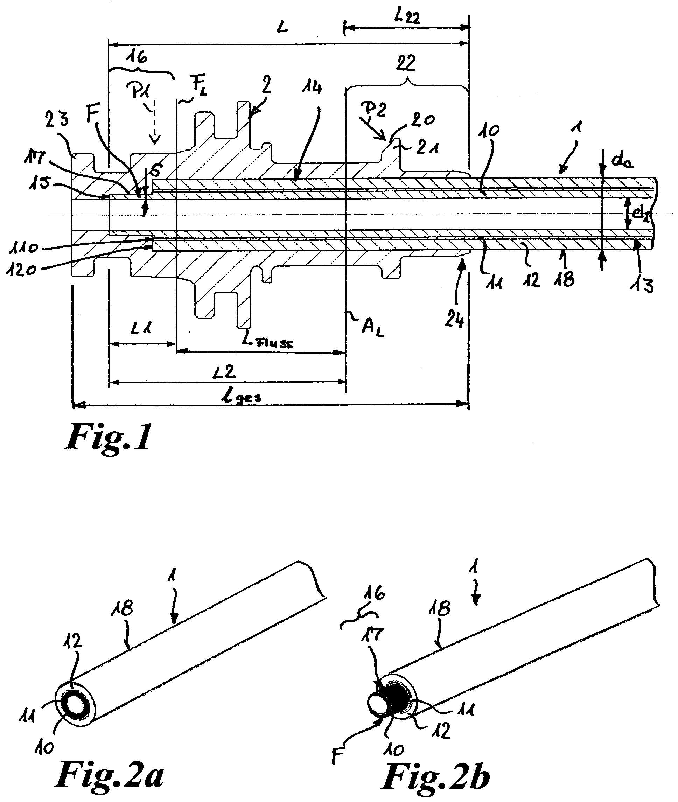

In Figur 1 ist eine Längsschnittansicht einer mit einer Verbindungskontur 2 versehenen mehrlagigen Medienleitung 1 gezeigt. Die Medienleitung weist eine Rohrwandung 13 mit einer ersten Schicht 10 als innerster Schicht, einer darüber angeordneten zweiten Schicht 11 als mittlerer Schicht und einer als Außenschicht vorgesehenen dritten, über der zweiten Schicht 11 angeordneten Schicht 12 auf. In Figur 1 ist das Leitungsende 14 der Medienleitung 1 gezeigt. Dieses ist mit der Verbindungskontur 2 versehen. Wie weiter Figur 1 entnommen werden kann, erstreckt sich die Verbindungskontur 2 über die Stirnseite 15 des Leitungsendes 14 der Medienleitung 1 hinaus, so dass das Leitungsende 14 der Medienleitung 1 vollständig von der Verbindungskontur 2 außenseitig umgeben ist. Die Verbindungskontur 2 ist auf dieses Leitungsende 14 der Medienleitung 1 aufgespritzt, also im Spritzgussverfahren aufgebracht, insbesondere in einem Spritzgusswerkzeug (in Figur 1 nicht gezeigt), das der Verbindungskontur 2 die gewünschte Form gibt.

Um eine mediendichte Anbindung der Verbindungskontur 2 bzw. von deren Material an der Medienleitung 1 insbesondere im Bereich von deren Leitungsende 14 zu ermöglichen, ist die Medienleitung 1 endseitig an ihrem Leitungsende 14 bis zur ersten Schicht 10 freigelegt. Dieser freigelegte Abschnitt des Leitungsabschnitts 14 der Medienleitung 1 wird als Freilegungsabschnitt 17 bezeichnet. Er ist in einer Fügezone 16 der Medienleitung angeordnet, die zum mediendichten Fügen des Materials der Verbindungskontur 2 und des Materials der Medienleitung 1 dient. Die Fügeschicht F, also die Schicht der Medienleitung 1, die mit dem Material der Verbindungskontur 2 mediendicht gefügt wird, ist in der Ausführungsform nach Figur 1 die innerste bzw. erste Schicht 10 der Rohrwandung 13 der Medienleitung 1. Die Auswahl, bis zu welcher Schicht die Medienleitung endseitig freigelegt wird, richtet sich nach dem Material, das chemisch und/oder stofflich mit dem Material der Verbindungskontur 2 kompatibel ist. In dem in Figur 1 gezeigten Ausführungsbeispiel ist das Material der ersten bzw. innersten Schicht 10 als chemisch und/oder stofflich kompatibel zu dem Material der Verbindungskontur 2 vorgesehen bzw. erkannt. Insbesondere kann mit dem Material der ersten Schicht 10 eine mediendichte, z.B. stoffschlüssige, Verbindung mit dem Material der Verbindungskontur 2 geschaffen werden.

Durch das Vorsehen des Freilegungsabschnitts 17 der Fügezone 16 wird ferner die zur Verfügung stehende Anbindungsfläche gegenüber dem sonst üblichen Verbinden einer nicht gestuften Außenschicht einer Medienleitung mit einer Verbindungskontur deutlich vergrößert. Eine noch weitere Vergrößerung der Anbindungsfläche kann durch Vorsehen beispielsweise einer weiteren Stufung ermöglicht werden. Eine solche kann beispielsweise dann erfolgen, wenn auch die mittlere Schicht 11 bezüglich ihres Materials chemisch und/oder stofflich kompatibel zu dem Material der Verbindungskontur 2 ist, somit ein mediendichtes Fügen der Materialien der mittleren Schicht 11 und der Verbindungskontur 2 ebenfalls möglich ist. Allerdings kann auch bei einer nicht vorhandenen Kompatibilität zwischen den Materialien der zweiten Schicht 11 und der Verbindungskontur 2 eine Stufung in diesem Bereich vorgesehen werden, wobei dann allerdings im Bereich der freigelegten zweiten bzw. mittleren Schicht 11 der Rohrwandung 13 der Medienleitung 1 keine chemische und/oder stoffliche Verbindung, somit kein mediendichtes Fügen, zwischen dem Material der Verbindungskontur 2 und der mittleren Schicht 11 erfolgt.

In den Figuren 2a und 2b ist die Medienleitung 1 einmal lediglich endseitig abgelängt, jedoch nicht zum Schaffen der Fügezone 16 endseitig freigelegt gezeigt, siehe Figur 2a, und zum anderen in Figur 2b nach endseitigem Freilegen bis zur innersten Schicht 10 der Medienleitung 1 zum Erzeugen des Freilegungsabschnitts 17 und somit der Fügezone 16 gezeigt. Die Schicht, bis zu der die Rohrwandung 13 der Medienleitung1 freigelegt wird, ist in den Figuren 2a und 2b die Trägerschicht der jeweiligen Medienleitung 1. Wie vorstehend erwähnt, kann dies jedoch auch eine über dieser angeordnete Schicht sein. Die Auswahl richtet sich hier nach der Kompatibilität der Materialien der Verbindungskontur 2 und der entsprechenden Schicht der Rohrwandung 13 der Medienleitung 1. Eine Kompatibilität der entsprechenden Materialien besteht beispielsweise dann, wenn gleiche Materialien verwendet werden, jedoch auch wenn gleichartige Materialien verwendet werden. Beispielsweise kann sowohl das Umspritzungsmaterial, das zum Ausbilden der Verbindungskontur 2 verwendet wird, als auch das Material der innersten Schicht 10, die beispielhaft in den Figuren 1 und 2b freigelegt ist, jeweils das gleiche Polyamid (PA) oder es können von den Eigenschaften ähnliche Polyamide sein, somit gleichartige Materialien, bei denen ebenfalls ein mediendichtes, z.B. stoffschlüssiges, Verbinden möglich ist.

Um eine Leitfähigkeit zum Ermöglichen eines Beheizens der Medienleitung über zumindest eine Schicht ihrer Rohrwandung 13 vorzusehen, kann beispielsweise die Außenschicht 12 von dieser leitfähig dotiert sein, z.B. ein leitfähig dotiertes Polyamid sein. Ein solches ermöglicht jedoch lediglich eine eingeschränkte Verbindungsfähigkeit der Außenschicht 12 der Medienleitung 1 mit dem Polyamid der Verbindungskontur 2.

Wie in Figur 1 angedeutet, kann beim endseitigen Freilegen der Medienleitung 1 nicht nur ein Freilegen beispielsweise durch Abschälen bis zur innersten Schicht 10 als Fügeschicht F der Rohrwandung 13 der Medienleitung 1 erfolgen, sondern auch noch ein Teil dieser Schicht mit abgetragen werden, so dass sich die Schichtdicke dieser materialkompatiblen Schicht, hier beispielhaft der Schicht 10, gegenüber der sonstigen Schichtdicke dieser Schicht 10 im Freilegungsabschnitt 17 noch weiter reduziert. Dies ist beispielhaft in Figur 1 gezeigt. Hierdurch ist es möglich, im Übergangsbereich von dem Freilegungsabschnitt 17 zu dem Rest der Medienleitung, also im Übergang zu einer dortigen Stirnseite 110 der mittleren Schicht 11 bzw. einer Stirnseite 120 der Außenschicht 12 eine mediendichte Verbindung von Verbindungskontur 2 und innerster bzw. erster Schicht 10 so weit wie möglich fortzuführen. Selbstverständlich ist es ebenfalls möglich, lediglich einen Abtrag der beiden oder mehreren, die materialkompatible Fügeschicht F überdeckenden Schichten vorzusehen, hier beispielhaft der zweiten Schicht 11 und der dritten Schicht 12 der Rohrwandung 13 der Medienleitung 1.

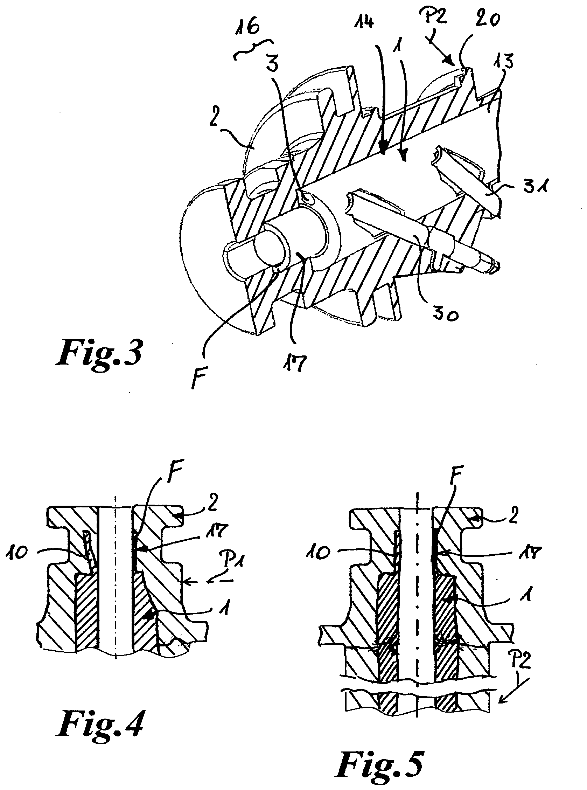

In Figur 1 und Figur 4 ist jeweils durch einen gestrichelten Pfeil P1 ein üblicher Anspritzpunkt für das Anspritzen der Formmasse bzw. des Umspritzungsmaterials zum Ausbilden einer Verbindungskontur gezeigt. Wie insbesondere Figur 4 weiter entnommen werden kann, träte jedoch beim Anspritzen an dieser Stelle bei Vorsehen des bezüglich seiner Wandungsstärke sehr dünnwandigen Freilegungsabschnitts 17 endseitig an der Medienleitung 1 eine unerwünschte Deformation und in der Folge Hinterspritzung mit Umspritzungsmaterial der Verbindungskontur 2 auf. Die freigelegte Fügeschicht F der Medienleitung weist insbesondere eine Schichtdicke von s von 0,05 bis 0,5 mm auf, so dass eine Deformation und dementsprechend nachfolgende Hinterspritzung dieser dünnen Schicht 10 der Rohrwandung 13 der Medienleitung im Bereich des Freilegungsabschnitts 17 bei Anspritzen in dem durch den Fall P1 gezeigten Bereich kaum verhindert werden kann.

Daher erfolgt ein Anspritzen des Umspritzungsmaterials entfernt von der Fügezone 16 bzw. dem Freilegungsabschnitt 17 der Medienleitung 1, beispielsweise in dem durch den Pfeil P2 in Figur 1 angedeuteten Anspritzpunkt 20. Letzterer liegt in dem in Figur 1 gezeigten Beispiel an einer auskragenden Ausformung 21 der Verbindungskontur 2. Dementsprechend ist der Anspritzpunkt 20 nicht nur entfernt von der Fügezone 16, sondern auch radial mit Abstand zu der Medienleitung 1 vorgesehen, um zu vermeiden, dass die Formmasse bzw. das Umspritzungsmaterial zum Erzeugen der Verbindungskontur 2 direkt auf die insbesondere aus thermoplastischem Material bestehende Rohrwandung 13 der Medienleitung 1 gespritzt wird. Hierdurch können Auswaschungen bzw. ein Abtragen des thermoplastischen Materials der Rohrwandung 13, insbesondere hier also der Außenschicht 12 von dieser, vermieden werden. Bezüglich eines Spritzgusswerkzeugs, in dem die Verbindungskontur nach positionsgenauem Einlegen der Medienleitung hergestellt wird, kann somit ein Anspritzen gegen eine dort vorgesehene Kavitätswandung, innerhalb derer die auskragende Ausformung 21 der Verbindungskontur 2 ausgebildet wird, erfolgen.

Von dem Anspritzpunkt 20 aus strömt das Umspritzungsmaterial zum Ausbilden der Verbindungskontur 2 in Richtung der Fügezone 16 und bildet hierbei eine homogene Quellströmung aus, so dass eine mediendichte Verbindung des Umspritzungsmaterials mit dem Material der freigelegten, hier ersten bzw. innersten Schicht 10 der Medienleitung 1 erfolgen kann. Durch das Vorsehen einer solchen homogenen Quellströmung durch Anspritzen entfernt von der Fügezone 16 der Medienleitung 1 kann das Ausbilden einer Bindenaht im Bereich der Fügezone 16 sicher vermieden werden, die ansonsten eine mediendichte Anbindung bzw. ein mediendichtes Fügen des Umspritzungsmaterials und des Materials der freigelegten Fügeschicht F, hier ersten Schicht 10, unterbinden könnte.

Wie Figur 1, jedoch auch den Figuren 3 und 5 entnommen werden kann, ragt ein erstes Ende 23 der Verbindungskontur 2 über die Stirnseite 15 des Leitungsendes 14 der Medienleitung 1 hinaus, so dass die mit der Verbindungskontur 2 umspritzte Länge L der Medienleitung 1 in den in den Figuren gezeigten Ausführungsvarianten kleiner als die Gesamtlänge l_{ges} der Verbindungskontur 2 ist. Die Fügezone 16 kann sich nicht nur über den freigelegten bzw. Freilegungsabschnitt 17 der Medienleitung 1 erstrecken, sondern je nach Materialwahl der Schichten der Medienleitung auch noch ein Stückchen über den freigelegten Abschnitt der Medienleitung hinaus, wie in Figur 1 durch eine Linie F_{L} angedeutet. Die Länge L1 der Fügezone 16, gemessen von der Stirnseite 15 des Leitungsendes 14 der Medienleitung 1 bis zur Linie F_{L}, ist insbesondere kleiner als 20 % der umspritzten Länge L der Medienleitung 1, somit L1 ≤ 0,2 * L.

Der Anspritzbereich 22, also der Bereich, in dem das Umspritzungsmaterial der Verbindungskontur 2 die Medienleitung 1 bzw. deren Leitungsende 14 umgebend an diese angespritzt wird, befindet sich entfernt von der Fügezone 16. Der Anspritzbereich 22 beginnt insbesondere in einem Abstand von mehr als 70 % der umspritzten Länge L, wiederum gemessen von der Stirnseite 15 des Leitungsendes 14 der Medienleitung 1 in Richtung zu dem gegenüberliegenden bzw. zweiten Ende 24 der Verbindungskontur 2. In Figur 1 ist dementsprechend eine Linie A_{L} gezeigt, die den Beginn des Anspritzbereichs 22, gemessen von der Stirnseite 15 des Leitungsendes 14 der Medienleitung 1 andeutet. Der Abstand L2 von der Stirnseite 15 des Leitungsendes 14 der Medienleitung 1 zu der Linie A_{L} beträgt somit L2 ≥ 0,7 * L, also der umspritzten Länge L der Medienleitung 1. Der Anspritzbereich 22 bemisst sich somit nach L₂₂ = L - L2, also der Differenz zwischen der umspritzten Länge L der Medienleitung 1 und der Länge bzw. dem Abstand L2 bis zum Beginn des Anspritzbereichs 22. Der zum Anspritzen verwendete tatsächliche Anspritzpunkt 20 liegt innerhalb des Anspritzbereichs 22, wie in Figur 1 zu sehen.

Beispielsweise kann die umspritzte Länge L der Medienleitung L = 32 mm betragen bei einem Außendurchmesser dₐ der Medienleitung 1 von z.B. dₐ = 7 mm und einem Innendurchmesser dᵢ der Medienleitung 1 von z.B. dᵢ = 3 mm. Die sog. freie Flusslänge L_{Fluss} der Schmelze, also des Umspritzungsmaterials, die sich vom Anspritzbereich 22 in Richtung der Fügezone 16 bewegt, bemisst sich aus der Differenz der Längen L2 und L1, also nach L_{Fluss} = L2 - L1, und kann beispielsweise L_{Fluss} ≥ 13 mm betragen, bei der genannten umspritzten Länge L von L = 32 mm.

Äußere mechanische Belastungen im Übergangsbereich zwischen der aufgebrachten Verbindungskontur 2 und der Medienleitung 1, also im Anspritzbereich 22 bzw. im Übergang von diesem zur nicht umspritzen Medienleitung 1 am zweiten Ende 24 der Verbindungskontur 2, werden in erster Linie über die Kontaktfläche zwischen der Verbindungskontur 2 und der Außenseite 18 der Rohrwandung 13 der Medienleitung 1 übertragen, wie dies ohne weiteres aus Figur 1 ersichtlich ist, so dass der Freilegungsabschnitt 17 der Medienleitung, der die Funktion einer Abdichtung beim Verbinden der Medienleitung 1 mit der Verbindungskontur 2 erfüllen soll, zumindest weitgehend frei von mechanischen Belastungen gehalten werden kann. Mechanische Belastungen werden somit nicht oder zumindest im Wesentlichen nicht in die Fügezone 16 der Medienleitung 1 übertragen.

Wie den Figuren 1, 3 und 5 weiter zu entnehmen ist, wird durch den Freilegungsabschnitt 17 der Medienleitung 1 ein etwa gleichbleibender Fließquerschnitt beim Füllen der Spritzgussform mit dem Umspritzungsmaterial zum Ausbilden der Verbindungskontur 2 geschaffen, was ebenfalls nicht nur zum mediendichten Verbinden bzw. Fügen, sondem auch zum Schaffen einer gleichmäßig stabilen Abdichtung vorteilhaft ist.

Wie der Figur 3 weiter entnommen kann, können auch elektrische Zuleiter 30, 31 von Heizelementen 3, die in der Rohrwandung 13 der Medienleitung 1 zu deren Beheizen angeordnet sind, in die Verbindungskontur mit eingebettet und somit von dem Umspritzungsmaterial zum Ausbilden der Verbindungskontur 2 mit umströmt und dementsprechend in die Verbindungskontur eingebettet werden.

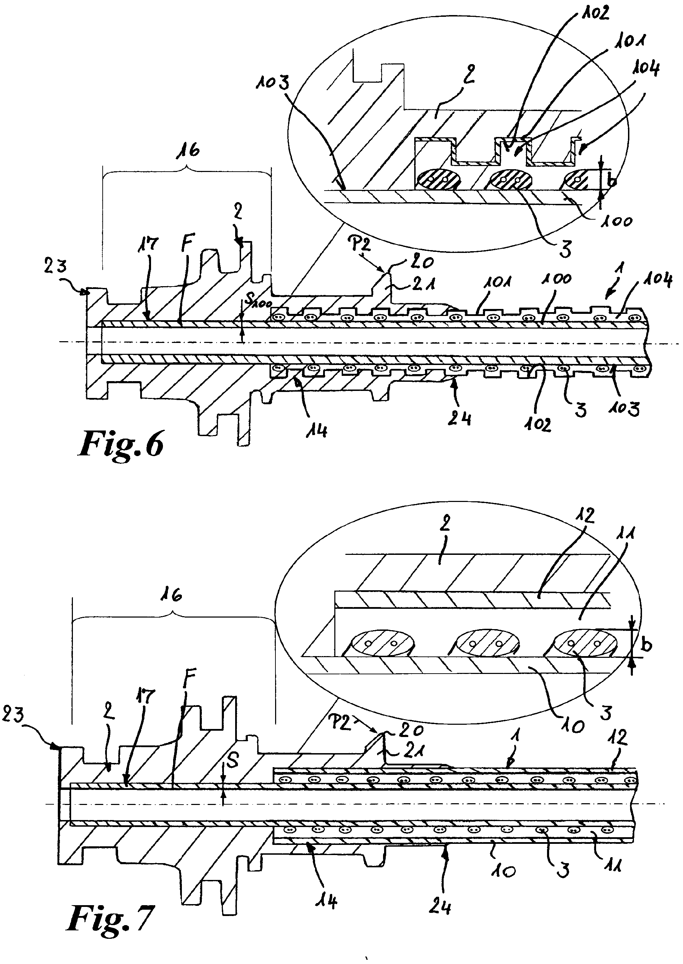

In den Figuren 6 und 7 sind zwei weitere Ausführungsvarianten der Medienleitung 1 skizziert, die, wie die Ausführungsvariante nach Figur 3, durch Vorsehen von Heizelementen 3 beheizbar ist. Bei der Ausführungsvariante nach Figur 6 weist die Medienleitung 1 eine erste Lage oder Schicht 100, eine darüber angeordnete zweite Lage in Form der Heizelemente 3 und darüber eine dritte Lage in Form eines Wellrohres 101 auf. Die erste Lage 100 weist eine sehr geringe Wandstärke S₁₀₀ von insbesondere S₁₀₀ ≤ 1,0 mm, insbesondere 0,1 bis 0,8 mm auf. Die erste Lage 100 der Medienleitung 1 ist somit sehr dünnwandig. Das Heizelement 3 kann beispielsweise in Form von einer oder mehreren Heizlitzen oder zumindest eines Heizbandes ausgebildet und um die erste Lage oder Schicht 100 der Medienleitung 1 herumgewunden bzw. gewickelt sein. Das Heizelement 3 in Form eines Heizbandes liegt auf der Außenseite 103 der ersten Lage 100 oder Schicht der Medienleitung 1 auf. Ein solches Heizband kann beispielsweise eine Höhe bzw. Dicke b von b = 1,5 bis 2 mm aufweisen. In den Figuren 6 und 7 sind die Heizelemente 3 zum Beheizen von durch die Medienleitung strömendem Medium lediglich schematisch und ohne eine Einrichtung zu deren Energieversorgung gezeigt. Zur Versorgung der Heizelemente 3 mit Energie bzw. Strom/Spannung werden diese an eine Energiequelle angeschlossen. Dies kann durch Verbinden der Heizelemente 3 mit elektrischen Zuleitern und/oder zumindest einer elektrischen Versorgungsleitung geschehen, die ihrerseits mit zumindest einem Elektroverbinder verbunden ist/sind. Über den zumindest einen Elektroverbinder ist ein Verbinden mit einer elektrischen Energiequelle möglich. Elektrische Zuleiter oder eine elektrische Versorgungsleitung für die Heizelemente 3 und zumindest ein Elektroverbinder können z.B. in die oder eine weitere der endseitig an der Medienleitung angebrachten Verbindungskonturen 2 integriert oder dort angeordnet werden. Ferner ist es möglich, dass die Einspeisung von elektrischer Energie in das zumindest eine Heizelement 3 an einer anderen Stelle entlang der Medienleitung 1 erfolgt, dort insbesondere ebenfalls durch Vorsehen zumindest zweier elektrischer Zuleiter bzw. einer Versorgungsleitung mit endseitigem oder endseitigen Elektroverbinder(n).

Zum Erzeugen der Fügezone 16 wird das zumindest eine Heizelement 3, insbesondere die Heizlitzen oder das Heizband, im Freilegungsabschnitt 17 von der Lage 100 entfernt, so dass die erste Lage bzw. Schicht 100 der Medienleitung 1 als Fügeschicht F mediendicht, insbesondere stoffschlüssig, mit dem Umspritzungsmaterial der Verbindungskontur 2 bei dessen Umspritzen des Endes der Medienleitung 1 mit der freigelegten Fügezone 16 verbunden werden kann. Das Wellrohr 101 als dritte Lage der mehrlagigen Medienleitung wird, wie in Figur 6 angedeutet, ebenfalls teilweise mit der Verbindungskontur 2 umspritzt, so dass ein Teil des Umspritzungsmaterials der Verbindungskontur 2 auch in das Innere des Wellrohres 101 eintreten kann, da zumindest ein geringer Luftspalt 104 zwischen der Innenseite 102 des Wellrohres 101 und der Außenseite 103 der ersten Lage 100 der Medienleitung 1 verbleibt, der der thermischen Isolation dient. In den Luftspalt 104 kann das Material der Verbindungskontur 2 bei deren Spritzgussvorgang zumindest teilweise mit hineinströmen, was in der vergrößerten Detailansicht in Figur 6 ebenfalls angedeutet ist. Der Freiraum bzw. Luftspalt 104 zwischen der Außenseite 103 der ersten Lage 100 der Medienleitung und der Innenseite 102 des Wellrohres 101 kann auch größer als in Figur 6 angedeutet ausgebildet sein.

Von dem Umspritzungsmaterial der Verbindungskontur 2 werden dann auch ein Teil der Heizelemente bzw. des Heizelementes 3 mit umspritzt und somit umhüllt. Einerseits besteht somit die Möglichkeit, dass beim Umspritzen des Endes der Medienleitung 1 das Umspritzungsmaterial zum Ausbilden der Verbindungskontur 2 bis auf das Wellrohr 101 oder allgemein ein Schutzrohr, das die mit dem oder den Heizelementen 3 versehene erste Lage 100 der Medienleitung außenseitig schützend und isolierend umgibt, oder zumindest bis an das Wellrohr 101 oder Schutzrohr heranreicht. Anstelle eines Wellrohres kann auch z.B. ein Glattrohr als Isolation und/oder Schutz außenseitig die erste Lage 100 mit dem darauf aufgefügten Heizelement oder den Heizelementen 3 vorgesehen werden. Je nach Wahl des Materials des Schutzrohres oder Wellrohres 101, das beispielsweise aus Polyamid bestehen kann, kann hierbei auch eine mediendichte Verbindung zwischen dem Umspritzungsmaterial zum Ausbilden der Verbindungskontur 2 und dem Schutzrohr bzw. Wellrohr 101 erzeugt werden. Die erste Lage 100 besteht aus einem mit dem Umspritzmaterial zum Ausbilden der Verbindungskontur 2 kompatiblen, also mediendicht fügbaren, Material, wie z.B. aus Polyamid.

Bei der in Figur 7 gezeigten Ausführungsvariante ist die Medienleitung 1 ebenfalls beheizbar durch Vorsehen der mittleren Schicht 11, die eine Heizschicht ist und, in der Heizlitzen oder zumindest ein Heizband, als Heizelemente 3, eingebettet sind. Die innerste Schicht 10 umgibt und bestimmt wiederum das innere Lumen der Medienleitung 1, während die Außenschicht 12 der Wandung der Medienleitung 1 als Schutzschicht ausgebildet ist. Beispielsweise kann diese zu diesem Zweck aus einem geschäumten Material bestehen. Auch bei einer solchen Ausführungsvariante der Medienleitung 1 wird wiederum die Fügezone 16 durch Entfernen der Außenschicht 12 bzw. Schutzschicht und der Heizschicht bzw. mittleren Schicht 11 im Freilegungsabschnitt 17 freigelegt, wobei die innerste Schicht 10 wiederum aus einem Material besteht, das mediendicht, beispielsweise stoffschlüssig, mit dem Umspritzungsmaterial zum Ausbilden der Verbindungskontur 2 gefügt werden kann. Die Heizschicht als mittlere Schicht 11 ebenso wie die Außenschicht 12 insbesondere in Form eines geschäumten Materials, die als Schutzschicht zum außenseitigen Schutz und ggf. thermischen Isolieren der Medienleitung 1 vorgesehen ist, bestehen insbesondere aus Materialien, die nicht mediendicht mit dem Umspritzungsmaterial zum Ausbilden der Verbindungskontur 2 gefügt werden können. Dementsprechend wird eine stoffschlüssige mediendichte Verbindung lediglich im Bereich der Fügezone 16, somit zwischen der innersten Schicht 10 und dem Umspritzungsmaterial zum Ausbilden der Verbindungskontur 2 geschaffen.

In jedem der vorstehend beschriebenen Ausführungsbeispiele, auch der der Figuren 6 und 7, wird vorteilhaft ein Anspritzen mit dem Umspritzungsmaterial wiederum entfernt von der Fügezone 16 der Medienleitung vorgesehen, weggerichtet von der Fügezone 16, um eine homogene Quellströmung zu unterstützen bzw. ausbilden zu können. Auch in den Figuren 6 und 7 ist die Anspritzrichtung durch den Pfeil P2 angedeutet, gerichtet auf den entfernt von der Fügezone 16 auf der Fügeschicht F angeordneten Anspritzpunkt 20.

Die Richtung des Anspitzens des Umspritzungsmaterials zum Ausbilden der Verbindungskontur kann weggerichtet von der Fügezone 16 vorgesehen werden, wie in Figur 1 durch den Pfeil P2 angedeutet bzw. auch in Figur 5, 6 und 7. Das Ausbilden einer homogenen Quellströmung wird hierdurch besonders unterstützt. Jedoch ist es ebenfalls möglich, eine andere Anspritzrichtung zu wählen, wenn sich dies bei der jeweiligen Anwendung als vorteilhaft erweist. Das Beabstanden des Anspritzpunktes 20 bzw. Anspritzbereichs 22 von der Fügezone 16 der Medienleitung 1 führt in jedem Falle, also auch bei einer anderen Anspritzrichtung, zu einer gleichmäßigen umlaufenden Fließfront des Umspritzungsmaterials im Bereich des Freilegungsabschnitts 17 am Leitungsende 14 der Medienleitung 1. Es ist somit möglich, unter Vorsehen lediglich eines Anspritzpunktes 20 eine kostengünstige Serienfertigung von mit Verbindungskonturen 2 versehenden Medienleitungen 1 vorzusehen.

Es ist sowohl bei mehrlagigen Medienleitungen, die miteinander verbundene, übereinander extrudierte Schichten aufweisen, als auch bei mehrlagigen Medienleitungen, die zumindest teilweise nicht miteinander verbundene Schichten oder Lagen aufweisen, wie beispielsweise eine innere oder erste Lage, die durch eine zweite Lage in Form eines oder mehrerer Heizelemente, wie zumindest einer Heizlitze oder zumindest eines Heizbandes, umwickelt oder umgeben ist, und eines außenseitigen Schutzes oder einer Isolierung dieser beiden Lagen der Medienleitung durch eine außenseitige Ummantelung, möglich, ein Delaminieren und Hinterspritzen einer Fügeschicht am Leitungsende zu vermeiden. Die außenseitige Ummantelung kann z.B. ein Schutzrohr, insbesondere in Form eines Wellrohres oder eines Glattrohres sein, so dass, zumindest keine Koextrusion mehrerer Schichten oder Lagen der Medienleitung vorgesehen ist, sondern ein Übereinanderfügen zumindest zweier Lagen, die unverbunden sind, nämlich der Heizelementlage und der außenseitigen Ummantelungslage. Auch das Vorsehen von zwischengefügten Schichten, die ebenfalls unverbunden mit den übrigen Schichten oder Lagen der Medienleitung sind, können bei der mehrlagigen Medienleitung vorgesehen werden. In jedem dieser Fälle ist es möglich, die Medienleitung endseitig zum Aufbringen der gewünschten Verbindungskontur, die beispielsweise in Form eines Steckers und/oder einer Kupplung ausgebildet sein kann, bis auf die Fügeschicht freizulegen, die mediendicht, insbesondere stoffschlüssig, mit dem Umspritzungsmaterial der Verbindungskontur verbunden werden kann. Hierbei reicht es entweder aus, lediglich das oder die Heizelemente, insbesondere Heizlitzen oder Heizband/Heizbänder, und ggf. diese umgebende weitere Schicht(en), zu entfernen bzw. ein oder mehrere über der Fügeschicht angeordnete Schichten oder Lagen der Medienleitung zu entfernen, so dass endseitig eine lediglich geringe Wandungsstärke der Medienleitung, also im Bereich der dünnwandigen Fügeschicht, verbleibt. Aufgrund der geringen Wandungsstärke würde es ggf. zu einer Delamination bzw. einem Deformieren der Fügeschicht im Bereich der Fügezone während des Spritzgussvorgangs beim Umspritzen des Leitungsendes der Medienleitung mit dem Umspritzungsmaterial zum Ausbilden der Verbindungskontur 2 kommen. Dies kann zum einen durch das Vorsehen des hiervon entfernten Anspritzpunktes 20, zum anderen durch die Wahl der Richtung des Anspritzens weggerichtet von der Fügezone 16 bzw. dem Freilegungsabschnitt 17 der Medienleitung verhindert werden. Dementsprechend ist es bei jeglicher Art von dünnwandiger Fügeschicht bzw. endseitig an der Medienleitung verbleibender Fügeschicht, die dem Fügen mit dem Umspritzungsmaterial zum Ausbilden der Verbindungskontur dient, möglich, die vorstehend erläuterte Vorgehensweise zum Spritzgießen der Verbindungskontur vorzusehen, ohne ein Delaminieren und Hinterspritzen der dünnwandigen Fügeschicht der Medienleitung befürchten zu müssen. Neben den im Vorstehenden beschriebenen und in den Figuren gezeigten Ausführungsvarianten von mehrlagigen Medienleitungen mit endseitig an diesen durch Umspritzen angeordneten Verbindungskonturen können noch zahlreiche weitere vorgesehen werden, insbesondere auch beliebige Kombinationen der vorstehend genannten Merkmale, bei denen die Medienleitung an ihrem Leitungsende bzw. im Bereich ihres Leitungsendes zumindest eine Fügezone zum mediendichten Fügen von Medienleitung und an dieser durch Anspritzen aufgebrachter Verbindungskontur aufweist, wobei in diesem Bereich die Medienleitung bis zu einer (inneren) Fügeschicht der Medienleitung freigelegt wird und wobei zumindest ein Anspritzbereich entfernt von der Fügezone der Medienleitung vorgesehen ist, wobei in dem Anspritzbereich die Verbindungskontur außenseitig an die Medienleitung angespritzt wird und das Umspritzungsmaterial von dem Anspritzbereich bzw. insbesondere einem Anspritzpunkt innerhalb des Anspritzbereichs in Richtung der Fügezone strömt.

### Bezugszeichenliste

- 1: Medienleitung
- 2: Verbindungskontur
- 3: Heizelement
- 10: erste Schicht/innerste Schicht
- 11: zweite Schicht/mittlere Schicht
- 12: dritte Schicht/Außenschicht
- 13: Rohrwandung
- 14: Leitungsende
- 15: Stirnseite
- 16: Fügezone
- 17: Freilegungsabschnitt
- 18: Außenseite der Rohrwandung
- 20: Anspritzpunkt
- 21: auskragende Ausformung
- 22: Anspritzbereich
- 23: erstes Ende
- 24: zweites Ende
- 30: elektrischer Zuleiter
- 31: elektrischer Zuleiter
- 100: erste Lage/Schicht
- 101: Wellrohr
- 102: Innenseite von 101
- 103: Außenseite von 100
- 104: Luftspalt
- 110: Stirnseite
- 120: Stirnseite
- F: Fügeschicht
- s: Schichtdicke von 10
- S₁₀₀: Wandungsstärke von 100
- L: umspritzte Länge von 1
- L1: Länge der Fügezone
- L2: Abstand zum Anspritzbereich
- L₂₂: Länge von 22
- I_{ges}: Gesamtlänge von 2
- L_{Fluss}: freie Flusslänge
- P1: gestrichelter Pfeil
- P2: Pfeil
- F_{L}: Linie
- A_{L}: Linie
- dₐ: Außendurchmesser
- dᵢ: Innendurchmesser
- b: Dicke/Höhe von 3

## Patentansprüche

1. Medienleitung (1) mit Verbindungskontur (2), wobei die Medienleitung (1) mehrlagig und an zumindest ihrem einen Leitungsende (14) mit der Verbindungskontur (2) versehen ist, wobei die mehrlagige Medienleitung (1) mit der Verbindungskontur (2) umspritzt ist, wobei die Medienleitung (1) an dem Leitungsende (14) oder im Bereich des Leitungsendes (14) zumindest eine Fügezone (16) zum mediendichten Fügen von Medienleitung (1) und Verbindungskontur (2) aufweist,
**dadurch gekennzeichnet, dass**
die Medienleitung (1) an dem Leitungsende (14) oder im Bereich des Leitungsendes (14) entfernt von der Fügezone (16) der Medienleitung (1) zumindest einen Anspritzbereich (22) aufweist, wobei die mehrlagige Medienleitung (1) in der Fügezone (16) zumindest einen bis zu einer Fügeschicht (F) der Leitungswandung (13) der Medienleitung (1) freigelegten Freilegungsabschnitt (17) aufweist, und über den Anspritzbereich (22) die Verbindungskontur (2) außenseitig an die Medienleitung (1) angespritzt ist, wobei zumindest ein Anspritzpunkt (20) im Anspritzbereich (22) der Verbindungskontur (2) vorgesehen und an einer oder im Bereich einer auskragenden Ausformung (21) der Verbindungskontur (2), entfernt von der Fügezone (16), angeordnet ist.

2. Medienleitung (1) nach Anspruch 1,
**dadurch gekennzeichnet, dass**
die mit der Verbindungskontur (2) umspritzte Länge (L) der Medienleitung (1) kleiner als die Gesamtlänge (L_{ges}) der Verbindungskontur (2) ist und die Fügezone (16) sich über eine Länge (L1) von ≤ 20 % der umspritzten Länge (L) der Medienleitung (1) erstreckt.

3. Medienleitung (1) nach Anspruch 2,
**dadurch gekennzeichnet, dass**
der Anspritzbereich (22) sich entfernt von der Fügezone (16) in einem Abschnitt der umspritzten Länge (L) der Medienleitung (1) erstreckt, der in einem Abstand (L2) zu der Fügezone (16) der Medienleitung (1) beginnt und sich bis zum von der Fügezone (16) entfernten Ende (24) der Verbindungkontur (2) erstreckt, wobei der Abstand (L2) ≥ 70 % der umspritzten Länge (L) der Medienleitung (1) beträgt.

4. Medienleitung (1) nach einem der vorstehenden Ansprüche,
**dadurch gekennzeichnet, dass**
zum mediendichten Fügen von Medienleitung (1) und Verbindungskontur (2) das Material der zumindest einen Fügeschicht (F) der Medienleitung (1) im Freilegungsabschnitt (17) und das Umspritzungsmaterial der Verbindungskontur (2) stofflich und/oder chemisch zueinander kompatibel sind, insbesondere gleiche oder gleichartige Materialien, insbesondere das Material der freigelegten Fügeschicht (F) der Medienleitung (1) mit dem Material der Verbindungskontur (2) gleichartig ist.

5. Medienleitung (1) nach einem der vorstehenden Ansprüche,
**dadurch gekennzeichnet, dass**
die mehrlagige Medienleitung (1) miteinander verbundene, insbesondere übereinander extrudierte, Schichten (10, 11, 12) aufweist.

6. Medienleitung (1) nach einem der Ansprüche 1 bis 5,
**dadurch gekennzeichnet, dass**
die mehrlagige Medienleitung (1) miteinander unverbundene Lagen oder Schichten umfasst, insbesondere zumindest eine außenseitige Schutzschicht (12) oder zumindest eine außenseitige Ummantelung, insbesondere in Form eines Wellrohres (101).

7. Medienleitung (1) nach einem der vorstehenden Ansprüche,
**dadurch gekennzeichnet, dass**
zumindest eine Außenschicht (12) der Medienleitung (1) nicht oder eingeschränkt verbindbar mit dem Material der Verbindungskontur (2) ist, insbesondere die zumindest eine Außenschicht (12) der Medienleitung (1) aus einem leitfähig dotierten Polyamid besteht oder dieses aufweist, die zumindest eine Außenschicht (12) eine außenseitige Schutzschicht aus einem geschäumten Material ist oder die zumindest eine Außenschicht (101) eine außenseitige Ummantelung aus Polyamid ist.

8. Verfahren zum Herstellen einer mit zumindest einer Verbindungskontur (2) versehenen mehrlagigen Medienleitung (1), wobei die Verbindungskontur (2) endseitig an die Medienleitung (1) angespritzt wird,
**dadurch gekennzeichnet, dass**
zum mediendichten Anbinden der Verbindungskontur (2) an die mehrlagige Medienleitung (1) letztere endseitig in einem Freilegungsabschnitt (17) bis zu einer Fügeschicht (F) freigelegt wird, die mit dem Material der Verbindungskontur (2) chemisch und/oder stofflich kompatibel ist, um eine Fügezone (16) zum mediendichten Fügen mit der Verbindungskontur (2) zu erzeugen, und dass zum Erzeugen der Verbindungskontur (2) Umspritzungsmaterial an zumindest einem entfernt von der Fügezone (16) liegenden Anspritzpunkt (20) an die Medienleitung (1) angespritzt wird.

9. Verfahren nach Anspruch 8,
**dadurch gekennzeichnet, dass**
das Material zum Bilden der Verbindungskontur (2) von dem zumindest einen Anspritzpunkt (20) aus in Richtung zur Fügezone (16) und zur Stirnseite (15,110,120) des Leitungsendes (14) der Medienleitung (1) homogen strömt, wobei die einströmende Materialschmelze zunächst hauptsächlich radial um die Medienleitung (1) herum und sodann gleichmäßig, als zylinderförmige Materialschmelze, axial in Richtung des Leitungsendes (14) der Medienleitung (1) strömt.

10. Verfahren nach Anspruch 8 oder 9,
**dadurch gekennzeichnet, dass**
das Anspritzen der Verbindungskontur (2) entgegen der Fließrichtung des Materials zum Bilden der Verbindungskontur (2) erfolgt.

11. Verfahren nach einem der Ansprüche 8 bis 10,
**dadurch gekennzeichnet, dass**
das zumindest eine Umspritzungsmaterial gegen eine Kavitätswandung in einem Spritzgusswerkzeug zum Formgeben der Verbindungskontur (2) beim Umspritzen der Medienleitung (1) und/oder radial entfernt von der Außenseite (18) der Leitungswandung (13) der Medienleitung (1) gespritzt wird.

## Claims

1. Media line (1) having a contoured connection portion (2), wherein the media line (1) is multi-ply and is provided with the contoured connection portion (2) at at least its one line end (14), wherein the multi-ply media line (1) is overmoulded with the contoured connection portion (2), wherein the media line (1) has at the line end (14) or in the region of the line end (14) at least one joining zone (16) for the media-tight joining of the media line (1) and the contoured connection portion (2),
**characterised in that**
the media line (1) has at the line end (14) or in the region of the line end (14) remote from the joining zone (16) of the media line (1) at least one injection-moulding region (22), wherein the multi-ply media line (1) has in the joining zone (16) at least one exposed portion (17) which is exposed as far as a joining layer (F) of the line wall (13) of the media line (1), and the contoured connection portion (2) is injection moulded onto the media line (1) externally *via* the injection-moulding region (22), wherein at least one injection point (20) is provided in the injection-moulding region (22) of the contoured connection portion (2) and is arranged at or in the region of a protruding formation (21) of the contoured connection portion (2), remote from the joining zone (16).

2. Media line (1) according to claim 1,
**characterised in that**
the length (L) of the media line (1) that is overmoulded with the contoured connection portion (2) is smaller than the overall length (L_{ges}) of the contoured connection portion (2), and the joining zone (16) extends over a length (L1) of ≤ 20% of the overmoulded length (L) of the media line (1).

3. Media line (1) according to claim 2,
**characterised in that**
the injection-moulding region (22) extends remote from the joining zone (16) in a portion of the overmoulded length (L) of the media line (1) that begins at a distance (L2) from the joining zone (16) of the media line (1) and extends as far as the end (24) of the contoured connection portion (2) that is remote from the joining zone (16), wherein the distance (L2) is ≥ 70% of the overmoulded length (L) of the media line (1).

4. Media line (1) according to any one of the preceding claims,
**characterised in that**
for the media-tight joining of the media line (1) and the contoured connection portion (2), the material of the at least one joining layer (F) of the media line (1) in the exposed portion (17) and the overmoulding material of the contoured connection portion (2) are materially and/or chemically compatible with one another, in particular are identical materials or materials of the same kind, in particular the material of the exposed joining layer (F) of the media line (1) is of the same kind as the material of the contoured connection portion (2).

5. Media line (1) according to any one of the preceding claims,
**characterised in that**
the multi-ply media line (1) has layers (10, 11, 12) which are connected together, in particular extruded over one another.

6. Media line (1) according to any one of claims 1 to 5,
**characterised in that**
the multi-ply media line (1) comprises plies or layers which are unconnected to one another, in particular at least one external protecting layer (12) or at least one external sheath, in particular in the form of a corrugated pipe (101).

7. Media line (1) according to any one of the preceding claims,
**characterised in that**
at least one outer layer (12) of the media line (1) cannot be connected or can be connected to a limited extent to the material of the contoured connection portion (2), in particular the at least one outer layer (12) of the media line (1) consists of or comprises a conductively doped polyamide, the at least one outer layer (12) is an external protecting layer of a foamed material, or the at least one outer layer (101) is an external sheath of polyamide.

8. Method for producing a multi-ply media line (1) provided with at least one contoured connection portion (2), wherein the contoured connection portion (2) is injection moulded onto the end of the media line (1),
**characterised in that**
for the media-tight attachment of the contoured connection portion (2) to the multi-ply media line (1), the media line is exposed at the end in an exposed portion (17) as far as a joining layer (F) which is chemically and/or materially compatible with the material of the contoured connection portion (2) in order to produce a joining zone (16) for media-tight joining to the contoured connection portion (2), and **in that**, for producing the contoured connection portion (2), overmoulding material is injection moulded onto the media line (1) at at least one injection point (20) which is remote from the joining zone (16).

9. Method according to claim 8,
**characterised in that**
the material for forming the contoured connection portion (2) flows homogeneously from the at least one injection point (20) in the direction of the joining zone (16) and of the end face (15, 110, 115) of the line end (14) of the media line (1), wherein the inflowing material melt first flows mainly radially around the media line (1) and then flows evenly, in the form of a cylindrical material melt, axially in the direction of the line end (14) of the media line (1).

10. Method according to claim 8 or 9,
**characterised in that**
the injection moulding of the contoured connection portion (2) takes place contrary to the direction of flow of the material for forming the contoured connection portion (2).

11. Method according to any one of claims 8 to 10,
**characterised in that**
the at least one overmoulding material is injected against a cavity wall in an injection moulding tool for shaping the contoured connection portion (2) on overmoulding of the media line (1) and/or radially remote from the outer side (18) of the line wall (13) of the media line (1).

## Revendications

1. Ligne de fluide (1) avec contour de raccordement (2), la ligne de fluide (1) étant multicouche et pourvue du contour de raccordement (2) à au moins une extrémité (14) de la ligne, la ligne de fluide multicouche (1) étant surmoulée avec le contour de raccordement (2), la ligne de fluide (1) présentant, à l'extrémité (14) ou dans la région de l'extrémité (14),au moins une zone de raccordement (16) pour le raccordement étanche au fluide de la ligne de fluide (1) au contour de raccordement (2),
**caractérisée** en cequelalignedefluide(1)présente, à l'écart de la zone de raccordement (16) de la ligne de fluide(1), au moins une zone d'injection (22), la ligne de fluide multicouche (1) présentantdans la zone de raccordement (16) au moins une section(17) exposée jusqu'à une couche de raccordement (F) de la paroi de ligne (13) de la ligne de fluide (1), et au-dessus de la zone d'injection (22), le contour de raccordement (2) est surmoulé sur la ligne de fluide (1), au moins un point d'injection (20) étant prévu dans la zone d'injection (22) du contour de raccordement (2) et étant disposé sur ou dans une zone d'une extension (21) du contour de raccordement (2), éloignée de la zone de raccordement (16).

2. Ligne defluide (1) selon la revendication 1,**caractérisée en ce que** la longueur (L) de la ligne de fluide (1) surmoulée avec le contour de raccordement (2) est inférieure à la longueur totale (Lges) du contour de raccordement (2), et **en ce que** la zone de raccordement (16) s'étend sur une longueur (L1) inférieure ou égale à 20% de la longueur surmoulée (L) de la lignede fluide (1).

3. Ligne de fluide (1) selon la revendication 2,**caractérisée en ce que** la zone d'injection (22) s'étend à distance de la zone de raccordement (16) dans une section de la longueur surmoulée (L) de la ligne de fluide (1) qui commence à une distance (L2) de la zone de raccordement (16) de la ligne de fluide (1) et s'étend jusqu'à l'extrémité (24) du contour de raccordement (2) éloignée de la zone de raccordement (16), la distance (L2) étant supérieure ou égale à 70% de la longueur surmoulée (L) de la ligne de fluide (1).

4. Ligne de fluide (1) selon l'une des revendications précédentes,**caractérisée en ce que** pour unraccordementétanche au fluide de la ligne de fluide (1) et du contour de raccordement (2), le matériau de la au moins une couche de raccordement(F) de la ligne de fluide (1) dans la section exposée (17) et le matériau de surmoulage du contour de raccordement (2) sont matériellement et / ou chimiquement compatibles l'un avec l'autre, en particulier des matériaux identiques ou similaires, en particulier le matériau de la couche de raccordement exposée (F) de la ligne de fluide (1), est similaire au matériau du contour de raccordement (2).

5. Ligne de fluide (1) selon l'une des revendications précédentes,**caractérisée en ce que** la ligne de fluide multicouche (1) comporte des couches (10, 11, 12) reliées les unes aux autres, en particulier extrudées les unes au-dessus des autres.

6. Ligne defluide (1) selon l'une des revendications 1 à 5,**caractérisée en ce que** la ligne de fluide multicouche (1) comprend des couches ou des couches non liées entre elles, notamment au moins une couche de protection extérieure (12) ou au moins une enveloppe extérieure, notamment sous la forme d'un tube ondulé (101).

7. Ligne de fluide (1) selon l'une des revendications précédentes,**caractérisée en ce qu'**au moins une couche externe (12) de la ligne de fluide (1) peut ne pas être connectée, ou bien être connectée de manière non restrictive, au matériau du contour de raccordement (2), en particulier la au moins une couche externe (12) de la ligne de fluide (1) est constituée de ou comprend du polyamide dopé de manière conductrice, la au moins une couche externe (12) est une couchede protection externe en matière expansée ou la au moins une couche externe (101) est une gaine externe en polyamide.

8. Procédé de fabrication d'une ligne de fluide multicouche (1) pourvue d'au moins un contour de raccordement (2), le contour de raccordement (2) étant moulé sur l'extrémité de la ligne de fluide (1),**caractérisé en ce que** pour unraccordement étanche du contour de raccordement (2) à la ligne de fluide multicouche (1), celle-ci est exposée à l'extrémité dans une section d'exposition (17) jusqu'à une couche de liaison (F) qui est chimiquement et / ou matériellement compatible avec le matériau du contour de raccordement(2), afin de créer une zone de raccordement (16) pour unraccordement étanche au fluide avec le contour de raccordement (2), et **en ce que** pour créer le contour de raccordement (2), un matériau de surmoulage est injecté sur la ligne de fluide (1) à au moins un point d'injection (20) éloigné de la zone de raccordement (16).

9. Procédé selon la revendication 8,**caractérisé en ce que** le matériau pour former le contour de raccordement (2) s'écoule de manière homogène depuis le au moins un point d'injection (20) en direction de la zone de raccordement (16) et vers la face d'extrémité (15,110,120) de l'extrémité de ligne (14) de la ligne de fluide (1), le matériau entrant fondus'écoulanttout d'abord radialement autour de la ligne de fluide (1), puis uniformément, sous forme dematière fondue cylindrique, axialement en direction de l'extrémité de ligne (14) de la ligne de fluide (1).

10. Procédé selon la revendication 8 ou 9,**caractérisé en ce que** le moulage du contour de raccordement (2) est effectué dans le sens contraire du sens d'écoulement du matériau pour former le contour de raccordement (2).

11. Procédé selon l'une des revendications 8 à 10,**caractérisé en ce que** le au moins un matériau de surmoulage est injectécontre une paroi en creux dans un outil de moulage par injection pour façonner le contour de raccordement (2) lors du surmoulage de la ligne de fluide (1) et / ou radialement à distance de l'extérieur (18) de la paroi de ligne (13) de la ligne de fluide (1).
